# EUROPÄISCHE PATENTSCHRIFT

(11) **EP 1 916 204 B1**
(45) Veröffentlichungstag und Bekanntmachung des Hinweises auf die Patenterteilung: **21.09.2011**
(21) Anmeldenummer: 07019219.0
(22) Anmeldetag: 29.09.2007
(51) Int. Cl.: B65G 1/04

(54) **Regallager**
Storage racks
Rayonnage

(30) Priorität: 23.10.2006 DE 202006016309 U
(43) Veröffentlichungstag der Anmeldung: 30.04.2008
(73) Patentinhaber: KEURO Besitz GmbH & Co. EDV-Dienstleistungs KG, 77855 Achern (DE)
(72) Erfinder: Huber, Bernhard, 77876 Kappelrodeck (DE)
(74) Vertreter: Lemcke, Brommer & Partner

(56) Entgegenhaltungen:
- EP-A- 1 348 646
- WO-A-2005/007541
- DE-A1- 2 160 280
- US-A- 6 023 989

## Beschreibung

Die Erfindung betrifft ein Regallager mit den Merkmalen des Oberbegriffs des Anspruches 1. Derartige Regallager sind aus der WO 2005/007541 A bekannt geworden.

Zwar gibt es im Stand der Technik verschiedenste Ausführungen von Regallagern mit Hubvorrichtung, gerade bei schwerem Lagergut weisen die üblicherweise verwendeten Hubvorrichtungen jedoch Seile, jedoch fast ausnahmslos einen Kettenantrieb auf, bei dem das Regalbediengerät eine sich parallel zum Regallager erstreckende, an zwei Ketten aufgehängte Traverse umfasst.

Kettenantriebe beispielsweise mit Rollenketten haben jedoch verschiedene Nachteile, die alle auf den vielgliedrigen Aufbau zurückzuführen sind: Einerseits weisen derartige Ketten eine Einlauflängung auf, da die sich linienförmig berührenden Kettenteile (insbesondere Bolzen und Kettenhülsen) zunächst bei größeren Belastungen die gegenseitigen Radien aneinander anpassen. Zwar ändert sich hierdurch die Länge eines Kettengliedes nur minimal, über die Gesamtkettenlänge (die oft im zweistelligen Meter-Bereich liegt) addieren sich diese minimalen Änderungen jedoch zu einer deutlichen Längenänderung, die ein Nachjustieren erforderlich macht.

In ähnlicher Weise wird die Kette auch in Abhängigkeit der Gewichtskraft des von ihr gerade handzuhabenden Lagerguts beeinflusst; wird eine Kette nach einem Einlagern des Lagerguts in ein Regalfach entlastet, so springt in der Regel die Traverse zwischen den beiden Ketten etwas nach oben auf ein Höhenniveau, das sogar einige Zentimeter über dem Niveau der Traverse im belasteten Zustand liegen kann. Auch diese Belastungslängung muss entsprechend kompensiert oder zumindest beim Arbeiten mit dem Kettenantrieb berücksichtigt werden.

Aus diesem Grunde sind derartige Kettenantriebe meist mit externen Positioniersystemen versehen, die unabhängig vom Belastungszustand und von einer etwaigen Einlauflängung oder einem sonstigen Verschleiß die exakte Höhenposition im Vergleich zum Regallager ermittelt.

Ketten besitzen somit die wesentlichen Nachteile einer elastischen Dehnung in Abhängigkeit von Belastungszustand, einer Einlauflängung, sich über die gesamte Kettenlänge aufaddierender Fertigungstoleranzen sowie eines vergleichsweise großen Verschleißes. Es liegt somit der vorliegenden Erfindung die Aufgabe zugrunde, ein Regallager der eingangs genannten Art zur Verfügung zu stellen, das sich durch eine Hubvorrichtung auszeichnet, die ohne Kettenantrieb arbeitet und dennoch dazu in der Lage ist, Lagergut mit größeren Gewichtskräften positionsgenauer handzuhaben.

Diese Aufgabe wird erfindungsgemäß bei einem Regallager mit den Merkmalen des Oberbegriffs des Anspruches 1 durch die Merkmale des kennzeichnenden Teils des Anspruches 1 gelöst.

Beim Stand der Technik werden die großen Nachteile vor allem durch den vielgliedrigen Kettenaufbau mit einer Vielzahl hintereinander geschalteter Kettenglieder hervorgerufen, wobei zwischen den Einzelteilen der Kettenglieder einerseits und zwischen benachbarten Kettengliedern andererseits kleine, das Bewegen der Kettenglieder ermöglichende Spalte dafür sorgen, dass sich das Maß dieser Spalte über die gesamte Kettenlänge auf eine beträchtliche Spaltengesamtlänge aufaddiert. Demgegenüber ist beim Gegenstand der vorliegenden Erfindung eine massive bzw. in sich stabile und unnachgiebige Profilstange vorgesehen, die sich weder elastisch dehnt, noch eine Einlauflängung aufweist, noch größere Fertigungstoleranzen oder einen größeren Verschleiß. Durch Verwendung der Profilstange ist somit sichergestellt, dass die eingangs geschilderten Nachteile des Standes der Technik vermieden werden können.

Mit der Profilstange wirkt ein Antriebsrad über eine sogenannte Triebstockverzahnung zusammen. Hierzu weist das Antriebsrad mehrere über seinen Umfang angeordnete Antriebsradglieder auf, die mit der Profilstange zur Bildung der Triebstockverzahnung in Eingriff bringbar sind. Üblicherweise bestehen die Antriebsradglieder des Antriebsrads aus Zapfen mit inneren Bolzen und äußeren, relativ zu den Bolzen drehbar angeordneten Hülsen und/oder Rollen.

Triebstockverzahnungen wurden beispielsweise im 19. Jahrhundert zum Antrieb von Mühlspindeln mit einer sogenannten Laterne verwendet, werden seither aber nur selten - allenfalls noch für Zahnradbahnen - benutzt. Bei einer Triebstockverzahnung befinden sich üblicherweise ein Zahnrad mit einem zweiten Rad in Eingriff, das axial stehende runde Stifte oder Zapfen als Zähne besitzt. Ebenso ist es im Stand der Technik bekannt, ein Zahnrad mit einer Profilstange zu kombinieren, wobei die Profilstange mit Triebstöcken leiterförmig ausgebildet ist.

Beim Gegenstand der vorliegenden Erfindung ist hingegen die Profilstange in herkömmlicher Art und Weise ähnlich einer Zahnstange mit Zähnen ausgebildet (also nicht leiterförmig), hingegen das mit der Profilstange zusammenwirkende Zahnrad weist anstelle von Zähnen Bolzen oder Zapfen auf, die so ähnlich aufgebaut sind wie die Bolzen von Kettengliedern, wobei die Bolzen in der Regel auch mit Hülsen und/oder Rollen versehen sind, um deren Abrollen entlang der Zähne der Profilstange zu ermöglichen.

Demnach steht im Fall der vorliegenden Erfindung die Profilstange fest und das angetriebene die Zapfen bzw. Bolzen aufweisende Zahnrad stützt sich an der feststehenden Profilstange ab. Wird nun das Antriebsrad durch einen Antengesamtlänge in Rotation um eine horizontale Radachse versetzt, so rollt das Antriebsrad entlang der Profilstange nach oben bzw. unten, wobei jeweils die über den Umfang des Antriebsrads verteilt angeordneten Zapfen bzw. Bolzen nacheinander die Profilstange beaufschlagen. Hierdurch wird der an dem Antriebsrad angelenkte Teil der Hubvorrichtung (der insbesondere aus einer Lasttraverse besteht) entlang der Profilstange und somit entlang des Regals in Vertikalrichtung verfahren.

Insgesamt bildet die erfindungsgemäße Hubvorrichtung mit Triebstockverzahnung ein System, das quasi aus den Einzelteilen eines Kettenantriebs besteht, jedoch in abgewandelter Anordnung und Funktion: Während die Profilstange mit den feststehenden Zähnen das ansonsten verwendete Kettenrad ersetzt bzw. ähnlich einer linearen Abwicklung eines Kettenrads aufgebaut ist, stellt das Antriebsrad mit den über den Umfang verteilten Zapfen so etwas wie eine kurze in Kreisform angeordnete Kette dar, die mit der Kettenradabwicklung zusammenwirkt.

Da man aber auf eine große Kettengliedanzahl mit sich aufaddierenden Spalten zwischen den Kettengliedern bzw. Kettengliedteilen verzichtet, reduziert man Toleranzen im System der Hubvorrichtung und vermeidet dadurch die wesentlichen Nachteile des Standes der Technik.

Wie es bei Kettengliedern der Fall ist, so kann auch zwischen Bolzen und Hülse und/oder Rolle des Antriebsrads ein Spalt zur Aufnahme von Schmiermittel vorgesehen sein, welches für einen wartungsarmen und verschleißarmen Betrieb der Hubvorrichtung sorgt.

Wie es auch bei Ketten, beispielsweise bei Motorradketten bekannt ist, wird die Hubvorrichtung dadurch noch wartungsärmer, dass eine zusätzliche Abdichtung des Spalts zwischen Bolzen und Hülse und/oder Rolle vorgesehen ist, was beispielsweise durch einen zusätzlichen O-Ring oder eine gleichwertige Dichtung erfolgen kann.

Was den sonstigen Aufbau des Regallagers betrifft, so ist erfindungsgemäß vorgesehen, dass das Regal zumindest zwei vertikale Regalstützen aufweist, die jeweils eine Profilstange tragen. Die Profilstangen sind hierzu parallel zueinander angeordnet und in Richtung der Außenseite des Regals orientiert, wo sie von den Antriebsrädern der Hubvorrichtung beaufschlagt werden können. Hierbei sind die Antriebsräder insbesondere an einer sich in Horizontalrichtung erstreckenden Lasttraverse beidseitig endständig angelenkt, wobei durch geeignete Mittel sichergestellt sein muss, dass die Lasttraverse am Regal so geführt ist, dass die Antriebsräder immer in der exakten Horizontalposition relativ zur Profilstange positioniert sind.

Erfindungsgemäß bestehen die Regalstützen aus zwei im Horizontalschnitt U-förmig abgewinkelten Profilen und die Profilstange ist zwischen den U-Profilen festgelegt. Dadurch ergibt sich ein verwindungssteifer knickstabiler Aufbau der Regalstützen, ohne dass hierfür die Stützen große Materialstärken aufweisen müssen. Bei Regalstützen ohne Profilstangen kann zur Erzielung einer entsprechenden Gesamtabmessung zwischen den beiden Profilen ein Distanzstück angeordnet sein.

Um ein ruhigeres Verfahren der Hubvorrichtung zu ermöglichen, ist vorzugsweise vorgesehen, dass das Antriebsrad so dimensioniert ist, dass jeweils zumindest zwei Antriebsradglieder gleichzeitig in Eingriff mit der Profilstange befindlich sind. So wird ein Aufklettern oder ein unsanftes Springen bei Entlastung eines Antriebsradglieds und Belastung eines nächsten Antriebsradglieds vermieden.

In an sich bekannter Weise besitzt die Profilstange in horizontaler Richtung vorstehende Zähne, wobei die Antriebsradglieder beim Eingriff in die Profilstange zwischen eine Zahnlücke zwischen zwei benachbarten Zähnen bis zum Profilstangenfuß eintauchen und entlang der Oberfläche der Zähne abrollen.

Vorzugsweise kann vorgesehen sein, dass das Regallager nicht nur eine, sondern zwei (oder gar mehrere) Hubvorrichtungen aufweist, beispielsweise zwei vertikal übereinander oder zwei auf einander gegenüberliegenden Seiten des Regals angeordnete Hubvorrichtungen.

Weitere Merkmale und Vorteile der vorliegenden Erfindung ergeben sich aus den Unteransprüchen und aus der nachfolgenden Beschreibung eines Ausführungsbeispiels anhand der Zeichnung; hierbei zeigen
- Figur 1: ein erfindungsgemäßes Regallager in perspektivischer Vorderansicht;
- Figur 2: ein Antriebsrad einer erfindungsgemäßen Hubvorrichtung in perspektivischer Seitenansicht;
- Figur 3: das Antriebsrad aus Figur 2 in geschnittener perspektivischer Seitenansicht; und
- Figur 4: eine Regalstütze in perspektivischer geschnittener Draufsicht.

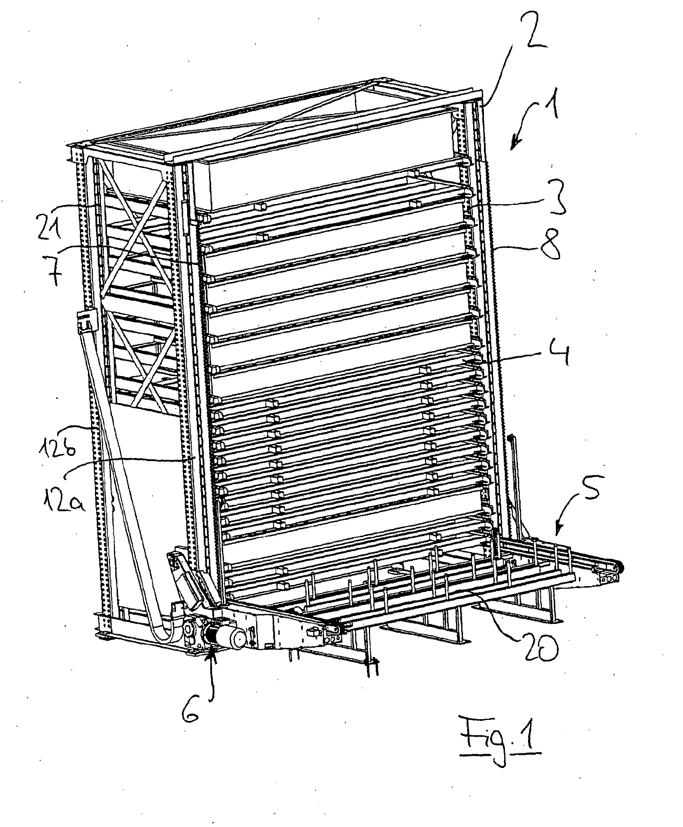

In Figur 1 ist ein Regallager 1 dargestellt mit einem Regal 2 mit mehreren Regalfächern 3 zur Aufnahme von plattenförmigem Lagergut 4, das parallel zueinander in horizontaler Ebene im Regal 2 aufbewahrt und dorthin eingelagert bzw. von dort ausgelagert werden kann.

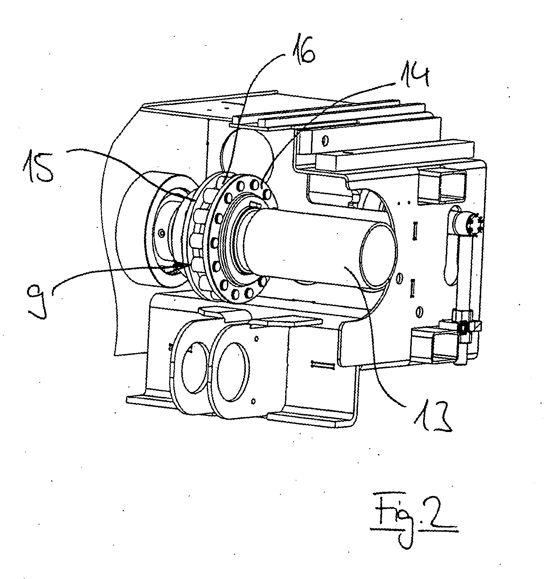

Das Ein-/Auslagern erfolgt über ein Regalbediengerät 5, das als einen wesentlichen Bestandteil eine Hubvorrichtung 6 aufweist mit zwei vertikalen Profilstangen 7, 8 und mit den Profilstangen zusammenwirkenden Antriebsrädern 9 (siehe Figur 2), die über eine sich in Horizontalrichtung erstreckende Lasttraverse 20 miteinander verbunden sind.

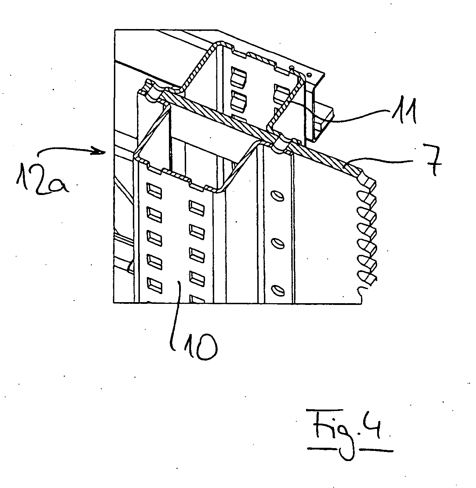

Die Profilstangen 7, 8 sind - wie es aus Figur 4 ersichtlich ist - zwischen zwei im Horizontalschnitt U-förmig abgewinkelten Profile 10, 11 festgelegt und sind somit knickstabil einerseits und verwindungssteif andererseits. Die zwei U-Profile 10, 11 bilden zusammen mit je einer Profilstange 7, 8 eine Regalstütze 12 a bzw. zusammen mit einem Distanzstück 21 - das sinnvollerweise die gleiche Stärke wie eine Profilstange aufweist - eine Regalstütze 12 b, wobei das Regal 2 insgesamt zwei parallel zueinander angeordnete vertikale vordere Regalstützen 12 a und zwei parallel zueinander angeordnete vertikale hintere Regalstützen 12 b aufweist.

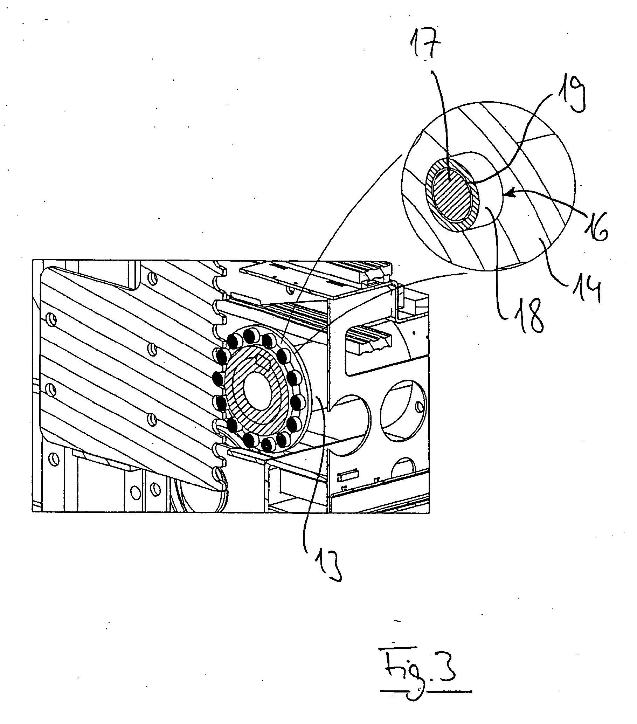

Der genaue Aufbau des erfindungswesentlichen Antriebsrads 9 ergibt sich aus den Figuren 2 und 3: Hier kann man erkennen, dass eine Antriebswelle 13, die eine Rotationsbewegung von einem (nicht dargestellten) Antriebsmotor überträgt, an das Antriebsrad 9 verdrehfest angeschlossen ist und so die Antriebsbewegung an das Antriebsrad weitergibt. Das Antriebsrad besteht insbesondere aus zwei Seitenscheiben 14, 15, die sich in vertikaler Ebene erstrecken. Zwischen den Seitenscheiben sind eine größere Anzahl von sich in horizontaler Richtung mit horizontaler Achse erstreckenden Zapfen 16 angeordnet, die aus inneren Bolzen 17 und äußeren Hülsen 18 bestehen, wobei zwischen Bolzen 17 und Hülse 18 jeweils ein Spalt 19 belassen ist zur Aufnahme von Schmiermittel.

Die Hülse 18 kann sich gegenüber dem Bolzen 17 um die Horizontalachse des Bolzens drehen und kann so an den Zähnen der Profilstange 7 bzw. 8 abrollen.

Zusammengefasst bietet die vorliegende Erfindung den Vorteil, mit einer festen Bezugskomponente, nämlich mit einer unnachgiebigen Profilstange zu arbeiten, die dazu führt, dass weder elastische Längungen noch Verschleiß noch Einlauflängungen etc. zu einer Abweichung der jeweiligen Position der Hubvorrichtung im Vergleich zum Regal führen.

## Patentansprüche

1. Regallager für insbesondere plattenförmiges Lagergut (4) mit zumindest einem Regal (2), das mehrere übereinander angeordnete Regalfächer zur Aufnahme des Lagerguts (4) aufweist, und mit zumindest einem Regalbediengerät zum Aus-/Einlagern des Lagerguts, wobei das Regalbediengerät relativ zum Regal höhenveränderbar angeordnet ist und zur Höhenveränderung eine Hubvorrichtung (6) aufweist, wobei die Hubvorrichtung (6) zumindest eine dem Regal (2) zugeordnete, sich im wesentlichen in Vertikalrichtung erstreckende Profilstange (7, 8) und ein dem höhenveränderbaren Regalbediengerät zugeordnetes Antriebsrad (9) aufweist, wobei das Regal (2) zumindest zwei vertikale Regalstützen (12a) aufweist,
**dadurch gekennzeichnet,**
**dass** das Antriebsrad (9) mit der Profilstange (7, 8) über eine Triebstockverzahnung zusammenwirkt und dass das Antriebsrad (9) mehrere über seinen Umfang angeordnete Antriebsradglieder (16) aufweist, die mit der Profilstange (7, 8) zur Bildung der Triebstockverzahnung in Eingriff bringbar sind, dass die zumindest zwei vertikale Regalstützen (12a) jeweils eine Profilstange (7, 8) tragen, dass die Regalstützen (12a) aus zwei im Horizontalschnitt U-förmig abgewinkelten Profile (10, 11) bestehen und dass die Profilstange (7, 8) zwischen den U-Profilen (10, 11) festgelegt ist.

2. Regallager nach zumindest Anspruch 1,
**dadurch gekennzeichnet,**
**dass** das Antriebsrad (9) eine horizontale Radachse aufweist und dass das Antriebsrad zur Erzeugung der Hubbewegung der Hubvorrichtung (6) durch einen Antriebsmotor in Rotation um die Radachse versetzbar und entlang der Profilstange (7, 8) in Vertikalrichtung verfahrbar ist.

3. Regallager nach zumindest Anspruch 1,
**dadurch gekennzeichnet,**
**dass** die Antriebsradglieder (16) des Antriebsrads (9) eine horizontale Achse aufweisen.

4. Regallager nach zumindest Anspruch 1,
**dadurch gekennzeichnet,**
**dass** die Antriebsradglieder (16) des Antriebsrads (9) aus Zapfen mit inneren Bolzen (17) und äußeren, relativ zu den Bolzen drehbar angeordneten Hülsen (18) und/oder Rollen bestehen.

5. Regallager nach zumindest Anspruch 4,
**dadurch gekennzeichnet,**
**dass** zwischen Bolzen (17) und Hülse (18) und/oder Rolle ein Spalt (19) zur Aufnahme von Schmiermittel vorgesehen ist.

6. Regailager nach zumindest Anspruch 1,
**dadurch gekennzeichnet,**
**dass** das Antriebsrad (9) so dimensioniert ist, dass jeweils zumindest zwei Antriebsradglieder (16) in Eingriff mit der Profilstange (7, 8) befindlich sind.

7. Regallager nach zumindest Anspruch 1,
**dadurch gekennzeichnet,**
**dass** die Profilstange (7, 8) in horizontaler Richtung vorstehende Zähne aufweist und dass die Antriebsradglieder (16) beim Eingriff in die Profilstange zwischen eine Zahnlücke zwischen zwei benachbarten Zähnen bis zum Profilstangenfuß eintauchen und entlang der Oberfläche der Zähne abrollen.

## Claims

1. Storage rack for stored goods (4), especially board-shaped stored goods, having at least one rack (2) which has a plurality of rack compartments arranged one above the other for receiving the stored goods (4), and having at least one rack-servicing apparatus for storing/retrieving the stored goods, the rack-servicing apparatus being arranged so as to be height-adjustable relative to the rack and having a lifting device (6) for adjusting its height, the lifting device (6) having at least one profiled bar (7, 8), which is associated with the rack (2) and extends substantially in the vertical direction, and a drive wheel (9) associated with the height-adjustable rack-servicing apparatus, the rack (2) having at least two vertical rack supports (12a),
**characterised in that**
the drive wheel (9) co-operates with the profiled bar (7, 8) by way of a lantern gear meshing arrangement, and the drive wheel (9) has arranged around its circumference a plurality of drive wheel members (16) which are arranged to be brought into engagement with the profiled bar (7, 8) to form the lantern gear meshing arrangement, the at least two vertical rack supports (12a) each carry a profiled bar (7, 8), the rack supports (12a) consist of two profiles (10, 11) bent in a U-shape in horizontal section and the profiled bar (7, 8) is fixed in place between the U-profiles (10, 11).

2. Storage rack according to at least claim 1,
**characterised in that**
the drive wheel (9) has a horizontal wheel axle, and to venerate the lifting movement of the lifting device (6) the drive wheel is arranged to be set in rotation about the wheel axle and moved along the profiled bar (7, 8) in the vertical direction by a drive motor.

3. Storage rack according to at least claim 1,
**characterised in that**
the drive wheel members (16) of the drive wheel (9) have a horizontal axis.

4. Storage rack according to at least claim 1,
**characterised in that**
the drive wheel members (16) of the drive wheel (9) consist of pins having internal bolts (17) and external sleeves (18) and/or rollers arranged so as to be rotatable relative to the bolts.

5. Storage rack according to at least claim 4,
**characterised in that**
between bolt (17) and sleeve (18) and/or roller there is provided a gap (19) for receiving lubricant.

6. Storage rack according to at least claim 1,
**characterised in that**
the drive wheel (9) is dimensioned so that at least two drive wheel members (16) at a time are in engagement with the profiled bar (7, 8).

7. Storage rack according to at least claim 1,
**characterised in that**
the profiled bar (7, 8) has horizontally projecting teeth and the drive wheel members (16), on engagement with the profiled bar, project into the gap between two adjacent teeth as far as the foot of the profiled bar and roll along the surface of the teeth,

## Revendications

1. Rayonnage destiné à un objet stocké (4) revêtant notamment la forme de plaques, comprenant au moins une étagère (2) munie de plusieurs compartiments de stockage placés en superposition, conçus pour recevoir ledit objet stocké (4), et au moins un appareil de manutention du stockage qui est affecté à l'extraction/à l'introduction dudit objet stocké, ledit appareil de manutention du stockage étant agencé avec hauteur variable par rapport à l'étagère, et étant équipé d'un dispositif de levage (6) en vue de faire varier la hauteur, lequel dispositif de levage (6) comporte au moins une barre profilée (7, 8) associée à l'étagère (2) et s'étendant pour l'essentiel dans la direction verticale, et une roue d'entraînement (9) assignée audit appareil de manutention du stockage, de hauteur variable, ladite étagère (2) étant pourvue d'au moins deux pièces verticales d'appui (12a),
**caractérisé par le fait**
**que** la roue d'entraînement (9) coopère avec la barre profilée (7, 8) par l'intermédiaire d'une denture en fuseau ; que ladite roue d'entraînement (9) comprend plusieurs éléments constitutifs (16) disposés sur son pourtour et pouvant être mis en prisé avec ladite barre profilée (7, 8), pour former ladite denture en fuseau ; que les deux pièces verticales (12a) d'appui de l'étagère, à présence minimale, portent respectivement une barre profilée (7, 8) ; que lesdites pièces (12a) d'appui de l'étagère sont composées de deux profilés (10, 11) coudés en U en coupe horizontale ; et que la barre profilée (7, 8) est bloquée à demeure entre lesdits profilés en U (10, 11).

2. Rayonnage selon au moins la revendication 1,
**caractérisé par le fait**
**que** la roue d'entraînement (9) présente un axe horizontal ; et que ladite roue d'entraînement peut être animée d'une rotation autour dudit axe, par l'intermédiaire d'un moteur d'entraînement, et peut être déplacée le long de la barre profilée (7, 8) dans la direction verticale, en vue de générer le mouvement de levage du dispositif de levage (6).

3. Rayonnage selon au moins la revendication 1,
**caractérisé par le fait**
**que** les éléments (16) constitutifs de la roue d'entraînement (9) présentent un axe horizontal.

4. Rayonnage selon au moins la revendication 1,
**caractérisé par le fait**
**que** les éléments (16) constitutifs de la roue d'entraînement (9) se présentent comme des tenons composés d'axes intérieurs (17), et de douilles (18) et/ou de rouleaux extérieur(e)s monté(e)s à rotation vis-à-vis desdits axes.

5. Rayonnage selon au moins la revendication 4,
**caractérisé par le fait**
**qu'**un interstice (19) est réservé entre un axe (17), et une douille (18) et/ou un rouleau, en vue de recevoir un agent lubriftant.

6. Rayonnage selon au moins la revendication 1,
**caractérisé par le fait**
**que** la roue d'entraînement (9) est dimensionnée de façon telle qu'au moins deux éléments (16) respectifs, constitutifs de ladite roue d'entraînement, soient en prise avec la barre profilée (7, 8).

7. Rayonnage selon au moins la revendication 1,
**caractérisé par le fait**
**que** la barre profilée (7, 8) offre des dents en saillie dans la direction horizontale ; et que, lorsqu'ils viennent en prise avec la barre profilée, les éléments (16) constitutifs de la roue d'entraînement s'enfoncent dans un entredent situé entre deux dents voisines, jusqu'à la base de ladite barre profilée, et roulent le long de la surface desdites dents.
